# FASCICULE DE BREVET EUROPEEN

(11) **EP 0 409 732 B1**
(45) Date de publication et mention de la délivrance du brevet: **18.05.1994**
(21) Numéro de dépôt: 90402080.7
(22) Date de dépôt: 19.07.1990
(51) Int. Cl.: G01F 23/28

(54) **Détecteur de la présence d'un liquide à guide composite d'ondes élastiques**
Detektor zur Anzeige einer Flüssigkeit unter Verwendung eines zusammengesetzten Wellenleiters sowie einer elastischen Welle
Detector for the presence of a liquid using a composite elastic wave guide

(30) Priorité: 20.07.1989 FR 8909805
(43) Date de publication de la demande: 23.01.1991
(73) Titulaire: AUXITROL S.A., F-92603 Asnieres (FR)
(72) Inventeur: Dieulesaint, Eugène, F-94100 Saint Maur (FR); Royer, Daniel, F-91700 Ste Geneviève Des Bois (FR); Legras, Olivier, F-77100 Meaux (FR)
(74) Mandataire: Thévenet, Jean-Bruno

(56) Documents cités:
- DE-A- 3 516 198
- FR-A- 2 596 515
- FR-A- 2 617 965

## Description

La présente invention a pour objet un détecteur de la présence d'un liquide à guide composite d'ondes élastiques, comprenant
a) un guide métallique monté sur un support et présentant une première extrémité libre située dans une zone non accessible par le liquide, et une deuxième extrémité libre située à l'intérieur d'un récipient contenant un liquide, en dessous d'un plan prédéterminé au niveau duquel la présence ou l'absence de liquide doit être détectée;
b) un moyen transducteur disposé au voisinage de ladite première extrémité libre; et
c) des moyens électroniques de traitement comprenant
   i) des circuits de production d'impulsions d'excitation de fréquence prédéterminée fᵢ appliquées périodiquement au moyen transducteur pour créer des ondes élastiques incidentes dans le guide, et
   ii) des circuits de détection des impulsions délivrées par le moyen transducteur en écho aux ondes élastiques incidentes en l'absence de liquide en contact avec la deuxième extrémité libre du guide.

Un détecteur de ce type a déjà été décrit dans le document FR-A-2 617 965 qui montre la mise en oeuvre d'un guide d'ondes élastiques monté sur la paroi latérale d'un récipient contenant un liquide. Toutefois, le détecteur connu par le document précité comprend un guide d'ondes fixé de façon classique sur la paroi latérale du récipient, par exemple à l'aide d'une bride, d'un manchon ou d'un écrou qui enserre directement la paroi latérale du guide. Dans la mesure où le guide d'ondes élastiques est lui-même réalisé de manière à présenter une grande sensibilité, la présence d'éléments de fixation coopérant directement avec la surface du guide peut conduire à altérer d'une façon plus ou moins importante la transmission des ondes élastiques et par là-même à affecter la qualité de la détection.

La présente invention vise précisément à remédier aux inconvénients précités et à réaliser un détecteur présentant une grande sensibilité au contact du liquide tout en restant insensible aux efforts mécaniques susceptibles d'être transmis par le support du détecteur.

Ces buts sont atteints grâce à un détecteur de la présence d'un liquide à guide composite d'ondes élastiques, du type défini en tête de la description, caractérisé en ce que le guide comprend une première partie supérieure cylindrique pleine, de section réduite dont le diamètre extérieur présente une première valeur d1, et qui est fixée sur un support, et une seconde partie inférieure rigide cylindrique dont le diamètre extérieur présente une seconde valeur d2 supérieure à ladite première valeur d1, qui prolonge vers le bas la première partie cylindrique et est raccordée à celle-ci par une courte portion de liaison. La valeur de la fréquence prédéterminée fᵢ est choisie de manière que les trains d'ondes élastiques se propagent dans la première partie cylindrique à la vitesse de groupe des ondes de basse fréquence et dans la deuxième partie cylindrique à la vitesse de groupe minimale correspondant au point d'inflexion de la courbe de la vitesse de phase en fonction de la fréquence.

Avantageusement, ladite seconde partie cylindrique présente une forme tubulaire.

La courte portion de liaison peut présenter une surface extérieure de forme essentiellement tronconique ou encore en forme de cloche.

Le guide composite peut être réalisé par exemple en acier inoxydable.

A titre d'exemple, le diamètre extérieur de la première partie cylindrique du guide est supérieur ou égal à 10 mm, le diamètre extérieur de la seconde partie cylindrique du guide est compris entre environ 15 et 25 mm et ladite fréquence prédéterminée fᵢ est comprise entre environ 75 et 175 kHz.

Les dimensions du guide peuvent varier dans de grandes proportions en fonction des applications envisagées. A titre d'exemple, la première partie cylindrique présente une longueur comprise entre environ 50 et 150 mm, la seconde partie cylindrique présente une longueur comprise entre environ 80 et 200 mm et la portion de liaison présente une longueur comprise entre environ 10 et 30 mm.

Selon un aspect particulier de l'invention, les circuits de production d'impulsions d'excitation comprennent le montage série constitué par un générateur, un amplificateur présentant une impédance de sortie faible et une inductance dont la valeur est déterminée pour définir, à ladite fréquence prédéterminée fᵢ, un circuit résonnant série avec le condensateur constitué par le moyen transducteur, et les circuits de détection des impulsions délivrées par le moyen transducteur comprennent au moins un amplificateur à grande impédance d'entrée et des moyens de visualisation ou d'analyse des signaux délivrés par ledit amplificateur.

D'autres caractéristiques et avantages de l'invention ressortiront de la description suivante des modes particuliers de réalisation, donnés à titre d'exemples, en référence aux dessins annexés, sur lesquels :
- la figure 1 est une vue schématique d'un détecteur de niveau de liquide selon l'invention comprenant un guide d'ondes élastiques vu en coupe longitudinale, et des circuits électroniques de traitement,
- la figure 2 est une vue schématique d'un détecteur de niveau de liquide analogue à celui de la figure 1, mais équipé de circuits électroniques de traitement constituant une variante de réalisation par rapport à la figure 1,
- la figure 3 est une vue en coupe longitudinale d'un exemple de guide composite à tube utilisable dans le détecteur des figures 1 et 2,
- la figure 4 est une vue en coupe longitudinale d'un exemple de guide composite plein utilisable dans le détecteur des figures 1 et 2,
- les figures 5 et 6 montrent un exemple de signaux visualisables à partir des détecteurs des figures 1 et 2, respectivement dans le cas où le guide d'ondes élastiques n'est pas en contact avec du liquide et dans le cas où le guide d'ondes élastiques présente au moins son extrémité inférieure plongée dans du liquide,
- la figure 7 montre des courbes représentant la variation de la vitesse de phase en mètres par seconde, en fonction de la fréquence en kilohertz, d'ondes élastiques se propageant dans des cylindres pleins ou dans des tubes de différentes sections, et
- la figure 8 montre des courbes représentant la variation de la vitesse de groupe en mètres par seconde, en fonction de la fréquence en kilohertz d'ondes élastiques se propageant dans des cylindres pleins ou dans des tubes de différentes sections.

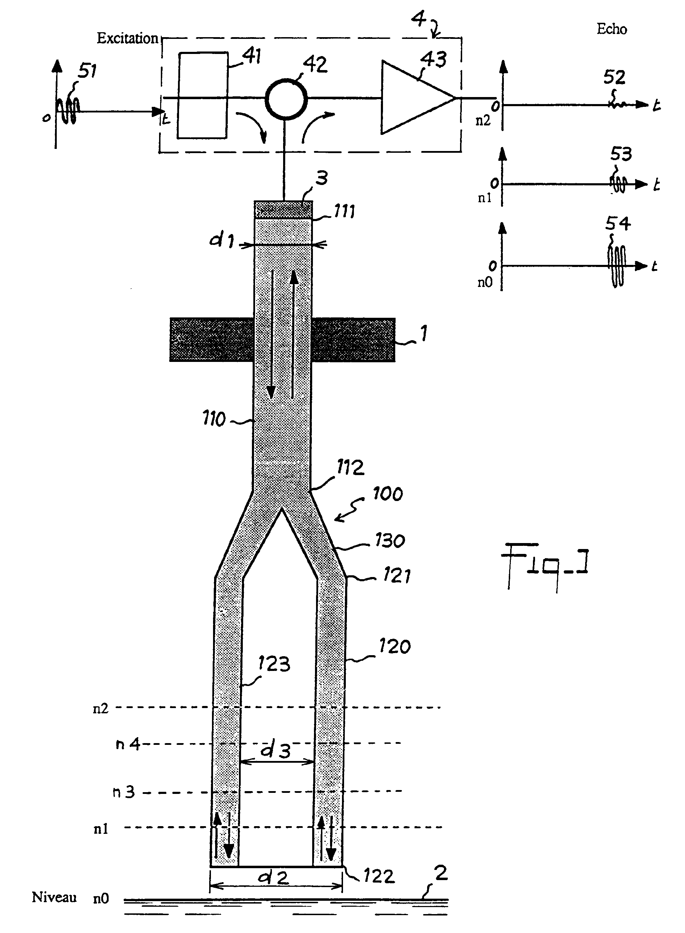

La figure 1 montre un exemple de détecteur de la présence ou l'absence d'un liquide 2 à un niveau prédéterminé n₁ dans un réservoir, non représenté sur le dessin. Le détecteur est fixé sur un support 1 pouvant être constitué par exemple par une bride.

Le détecteur comprend essentiellement un guide d'ondes élastiques 100 dont l'extrémité libre inférieure 122 est située à l'intérieur du réservoir contenant le liquide 2, immédiatement en dessous dudit niveau prédéterminé n₁. L'extrémité libre supérieure 111 du guide 100 porte un transducteur 3, par exemple une céramique piézoélectrique PZT, dont les électrodes sont reliées à un circuit 4 d'excitation et de traitement.

Le circuit 4 comprend un générateur 41 de trains d'ondes 51 qui sont appliqués par l'intermédiaire de portes logiques 42 au transducteur 3 qui provoque l'émission d'ondes élastiques qui sont transmises le long du guide 100 jusqu'à l'extrémité libre inférieure 122. Lorsque cette extrémité libre 122 n'est pas en contact avec le liquide, comme c'est le cas sur la figure 1, le train d'ondes émis 51 est réfléchi à l'extrémité 122 du tube 100 et provoque l'apparition d'un écho à l'extrémité 111 qui est appliqué au transducteur 3 et transmis sous la forme d'un signal électrique par les portes logiques 42 vers des circuits de traitement 43 comprenant un amplificateur et un organe d'affichage ou de détection à seuil.

Dans le cas de la position du liquide 2 à un niveau nₒ comme représenté sur la figure 1, l'écho représente un train d'ondes 54 de grande amplitude, décalé dans le temps par rapport à l'émission du train d'ondes 51 par les circuits 41 d'excitation du transducteur. Le décalage dans le temps entre les trains d'ondes 51 et 54 correspond à la durée d'un aller et retour du train d'ondes élastiques dans le guide 100.

Lorsque le niveau du liquide 2 atteint l'extrémité libre inférieure 122 du guide 100 (niveau n₁), le train d'ondes élastiques émis par le transducteur 3 est absorbé par le liquide, ce qui conduit à une atténuation importante du train d'ondes réfléchi. L'amplitude de l'écho 53 est donc inférieure à celle de l'écho 54. Si le liquide recouvre toute la partie inférieure du guide 100, par exemple jusqu 'à un niveau n₂, le train d'ondes réfléchi 52 en forme d'écho disparaît complètement. Le niveau n₂ pour lequel l'écho a complètement disparu peut se situer par exemple à environ 10 cm de l'extrémité inférieure 122. Les figures 5 et 6 montrent la forme du signal qui peut être observé en sortie du circuit amplificateur 43 respectivement lorsque le guide 100 est complètement hors du liquide (par exemple le liquide 2 étant au niveau nₒ de la figure 1) et lorsque le niveau de liquide dépasse l'extrémité inférieure 122 du guide 100 (par exemple le liquide atteignant le niveau n₂ de la figure 1).

Une particularité essentielle du détecteur selon la présente invention réside dans la réalisation d'un guide 100 composite présentant une première partie 110 sur laquelle agissent les moyens de support 1 du guide, et dont la surface extérieure est peu sensible aux actions extérieures, et une seconde partie 120 présentant une surface extérieure très sensible à la présence d'un liquide. Cette structure permet d'éviter que les moyens de fixation du guide 100 sur un support 1 aient une influence sur la détection, ce qui rend le dispositif plus fiable et d'un fonctionnement plus homogène que les dispositifs contacteurs déjà connus. Par ailleurs, le choix de la géométrie de la deuxième partie 120 permet d'ajuster la sensibilité du guide 100 au contact du liquide sans qu'il soit nécessaire de modifier ou adapter les moyens de support agissant sur la première partie 110.

Comme on peut le voir sur la figure 1, la première partie insensible 110 du guide 100 est essentiellement constituée par un cylindre plein de relativement faible diamètre extérieur d1 tandis que la seconde partie sensible 120 du guide 100 comprend un cylindre, de préférence tubulaire, dont le diamètre extérieur d2 est sensiblement plus important que celui de la première partie cylindrique pleine 110.

La partie inférieure 112 de la première partie cylindrique pleine 110 est raccordée à la partie supérieure 121 de la seconde partie cylindrique 120 de grand diamètre par une portion de liaison 130 qui peut présenter une surface extérieure tronconique ou en forme de cloche. De préférence, le guide 100 est réalisé d'une seule pièce en un matériau métallique tel qu'un acier inoxydable ou un alliage d'aluminium par exemple.

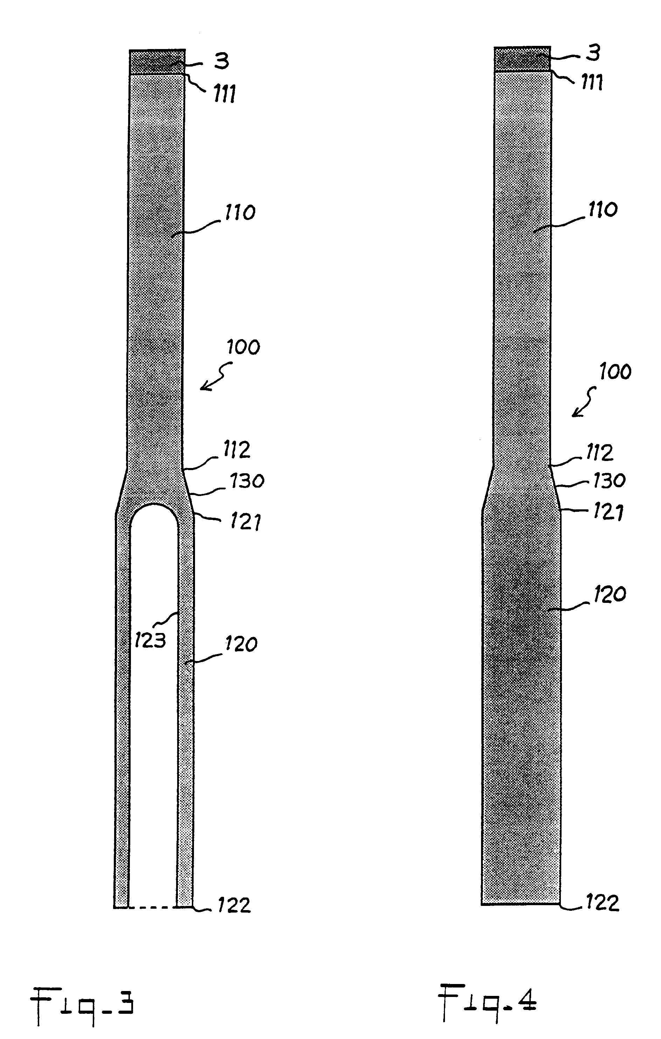

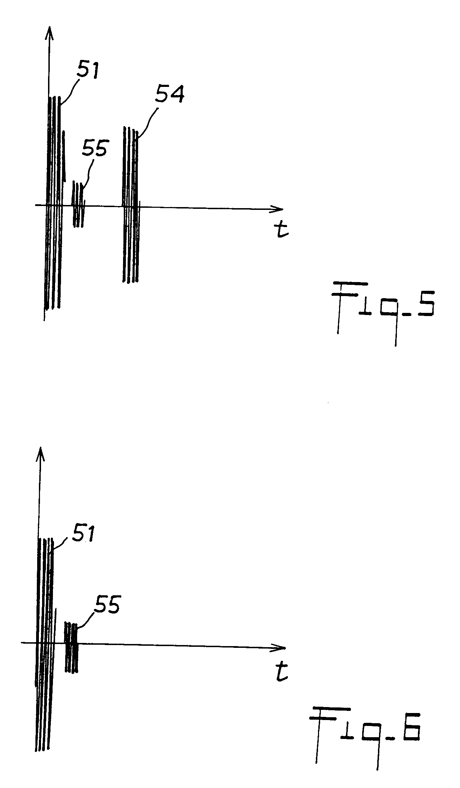

Les figures 3 et 4 montrent deux variantes de réalisation d'un guide 100 selon l'invention.

Sur la figure 3, la partie inférieure 120 du guide 100 est tubulaire et définit un espace évidé 123 à l'intérieur du guide. Ceci permet d'augmenter la sensibilité de la détection et de choisir des fréquences d'excitation pas trop élevées pour les trains d'ondes, par exemple des fréquences de l'ordre de 75 à 125 kHz. L'espace évidé 123 peut naturellement être obturé à sa partie inférieure 122 pour éviter l'introduction du liquide et le cas échéant de particules en suspension dans le liquide, à l'intérieur de la cavité 123. Il est toutefois préférable que la plaque d'obturation de l'extrémité 122 soit réalisée en un matériau n'influençant pas de façon sensible la propagation et la réflexion des ondes élastiques.

La figure 4 représente un guide 100 massif comprenant une première partie supérieure 110 cylindrique pleine et une deuxième partie inférieure 120 également cylindrique et pleine, mais de diamètre nettement supérieur à celui de la première partie 110. Une portion tronconique 130 de faible hauteur relie la première partie 110 insensible au liquide et la seconde partie 120 sensible à la présence de liquide. Ce mode de réalisation est un peu moins sensible que celui de la figure 3 mais peut présenter des avantages par exemple lors d'utilisations dans des milieux très agressifs.

Le détecteur selon l'invention est particulièrement robuste du fait qu'il ne comporte aucune pièce mobile et peut être fixé facilement et fermement sur sa première partie 110. Son fonctionnement est indépendant des caractéristiques (résistivité, permittivité, chaleur spécifique...) du liquide. Il ne nécessite la circulation d'aucun courant électrique à l'intérieur du réservoir. La sensibilité peut être facilement choisie dans la mesure où elle ne dépend que des dimensions de la partie inférieure 120 sensible au contact du liquide.

Afin d'expliciter la détermination des caractéristiques géométriques et des dimensions du guide d'ondes 100 et le choix de la fréquence prédéterminée d'excitation du transducteur 3, on a considéré à titre d'exemple quatre tronçons de guide cylindrique en acier inoxydable présentant des dimensions différentes.

Un premier tronçon de guide cylindrique A est constitué par un barreau cylindrique plein de relativement faible diamètre (14 mm dans l'exemple considéré). Ce tronçon de guide cylindrique A peut ainsi correspondre aux premières parties pleines 110 des guides 100 des figures 1 à 4.

Un second tronçon de guide cylindrique B est constitué par un barreau cylindrique plein de diamètre extérieur plus important (20 mm dans l'exemple considéré). Ce tronçon de guide cylindrique B peut ainsi correspondre à la deuxième partie pleine de section élargie 120 du guide 100 de la figure 4.

Un troisième tronçon de guide cylindrique C est constitué par un tube cylindrique de diamètre extérieur du même ordre de grandeur que celui du second barreau cylindrique plein B (20 mm dans l'exemple considéré) et présentant une épaisseur de paroi relativement importante (diamètre intérieur de 12 mm dans l'exemple considéré). Ce tronçon de guide tubulaire cylindrique C peut ainsi correspondre à la deuxième partie tubulaire 120 du guide 100 des figures 1 à 3.

Un quatrième tronçon de guide cylindrique D est constitué par un tube cylindrique de diamètre extérieur du même ordre de grandeur que celui du second barreau cylindrique plein B (20 mm dans l'exemple considéré) et présentant une épaisseur de paroi réduite (diamètre intérieur de 16,6 mm dans l'exemple considéré). Ce tronçon de guide tubulaire cylindrique D peut ainsi correspondre également à la deuxième partie tubulaire 120 du guide 100 des figures 1 à 3.

On a représenté sur la figure 7 les courbes a, b, c, d représentant en fonction de la fréquence f des trains d'ondes, exprimée en kHz, la variation de la vitesse de phase, exprimée en m/s, d'ondes élastiques se propageant dans des guides cylindriques (en acier) correspondant aux guides A, B, C, D définis ci-dessus.

On remarque que les courbes a, b, c, d se confondent aux basses fréquences (inférieures à 50kHz) et aux hautes fréquences (au-delà de 300 kHz). Aux basses fréquences, les ondes élastiques sont constituées par des ondes de volume longitudinales tandis qu'aux hautes fréquences, les ondes élastiques représentent des ondes de surface (ondes de Rayleigh). Le guide d'ondes selon l'invention n'est pas prévu pour fonctionner avec des ondes de surface. Aussi, les courbes a, b, c, d n'ont pas été prolongées jusqu'aux très hautes fréquences. On remarquera cependant que la vitesse des ondes de surface est dans tous les cas inférieure à celle des ondes de basse fréquence. La forme des courbes a, b, c, d montre qu'elles tendent toutes vers une vitesse d'ondes de surface de l'ordre de 3000 m/s tandis que la vitesse à très basse fréquence est supérieure à 5000 m/s. Il en résulte que chacune des courbes a, b, c, d présente un pont d'inflexion.

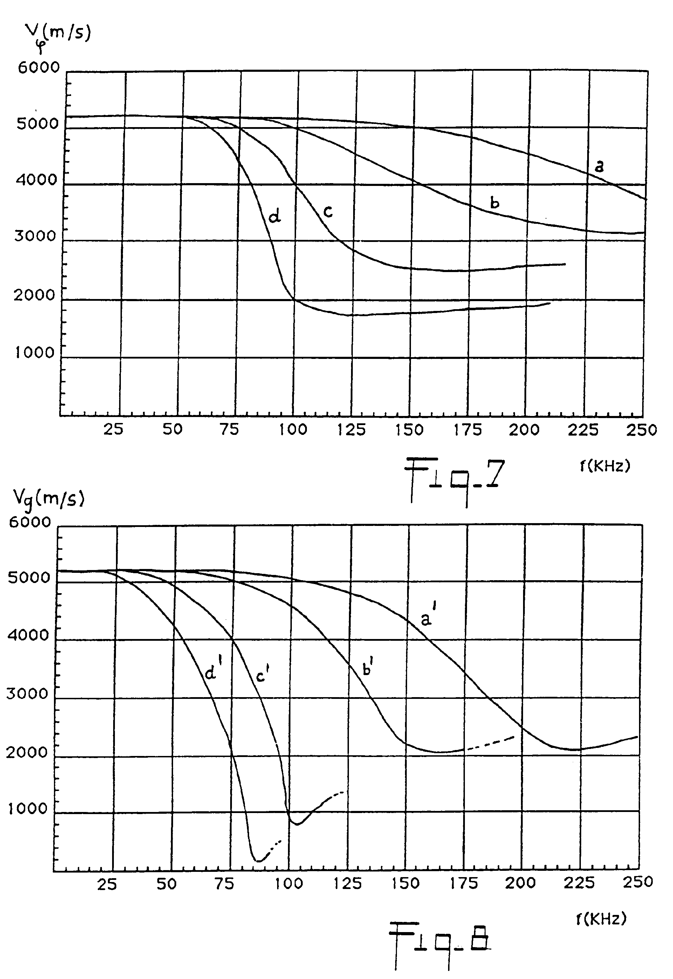

La figure 8 montre des courbes a', b', c', d' représentant, en fonction de la fréquence f des trains d'ondes, exprimés en kHz, la variation de la vitesse de groupe, exprimée en m/s, d'ondes élastiques se propageant dans des guides cylindriques correspondant aux guides A, B, C, D définis plus haut.

On constate que chacune des courbes a', b', c', d' représentative de la vitesse de groupe passe par un minimum. Si l'on compare les courbes a, b, c, d de la figure 7 et les courbes a', b', c', d' de la figure 8, on constate que plus la pente de la courbe a, b, c, d donnant la vitesse de phase est grande au point d'inflexion, plus le minimum atteint par la courbe a', b', c', d' donnant la vitesse de groupe est située à une faible valeur, et correspond donc à une grande dispersion.

L'expérience a montré que la sensibilité d'un guide cylindrique au contact d'un liquide est d'autant plus grande que la dispersion est importante.

Le guide composite 100 selon l'invention prend en compte une première partie 110 peu dispersive et peu sensible ayant le comportement des courbes a et a' dans la mesure où cette première partie est constituée par un cylindre plein de relativement faible diamètre. La première partie 110 peu sensible au contact avec le liquide et peu affectée par la présence d'efforts exercés par les moyens de support assure toutefois pleinement la fonction de guide pour les trains d'ondes élastiques émis par le transducteur 3 sous la forme d'impulsions ayant une fréquence porteuse prédéterminée fᵢ.

La deuxième partie 120 du guide composite 100 est au contraire réalisée de manière à correspondre au comportement des courbes b, b'; c, c' ou d, d' et donc à être très dispersive et très sensible au contact avec le liquide.

On remarque que la deuxième partie 120 présente une sensibilité croissante selon qu'elle est réalisée sous la forme d'un cylindre plein de section élargie par rapport à celle de la première partie 110 (courbes b, b'), sous la forme d'un tube cylindrique épais de section élargie (courbes c, c') ou sous la forme d'un tube cylindrique mince de section élargie (courbes d, d').

Le choix de la sensibilité de la deuxième partie 120 du guide 100, et donc le choix de la forme et des dimensions de cette deuxième partie 120, dépendent des applications envisagées. La détermination de la fréquence porteuse des trains d'ondes doit elle-même être adaptée au choix des caractéristiques de la deuxième partie 120 du guide. Ainsi, avec un guide composite 100 dont la partie inférieure 120 est tubulaire, comme représenté sur les figures 1 à 3, la fréquence d'excitation (par exemple de l'ordre de 100 kHz) doit être inférieure à la fréquence d'excitation (par exemple de l'ordre de 160 kHz) choisie dans le cas d'un guide composite 100 dont la partie inférieure 120 est pleine comme représenté sur la figure 4. La fréquence d'excitation sera également d'autant plus faible que l'épaisseur de la partie inférieure tubulaire 120 est faible. Pour un guide composite de géométrie et dimensions données, la sensibilité peut être ajustée dans une certaine plage de valeurs en fonction de la valeur choisie pour la fréquence d'excitation.

Pour la plupart des applications, le guide composite 100 selon l'invention fonctionne de façon satisfaisante si la valeur d2 du diamètre extérieur de la seconde partie cylindrique 120 est au moins égale à la première valeur d1 du diamètre extérieur de la première partie cylindrique 110 multipliée par un coefficient égal à 1, 3, et si la valeur de la fréquence prédéterminée fᵢ est choisie de manière que les trains d'ondes élastiques se propagent dans la première partie cylindrique 110 à la vitesse de groupe des ondes de basse fréquence et dans la deuxième partie cylindrique 120 à la vitesse de groupe minimale correspondant au point d'inflexion de la courbe de la vitesse de phase en fonction de la fréquence.

A titre d'exemple, le diamètre extérieur de la première partie cylindrique du guide est égal à 14 mm, le diamètre extérieur de la seconde partie cylindrique tubulaire du guide est 20 mm, le diamètre intérieur pouvant varier de 0 à 18 mm, et la dite fréquence prédéterminée fᵢ est comprise entre 75 et 175 kHz.

Les dimensions longitudinales du guide 100 ne sont pas critiques. A titre d'exemple, la première partie cylindrique 110 peut présenter une longueur comprise entre environ 50 et 150 mm, par exemple 100 mm, la seconde partie cylindrique 120 peut présenter une longueur comprise entre environ 80 et 200 mm, par exemple 100 mm, et la portion de liaison 130 peut présenter une longueur comprise entre environ 10 et 30 mm.

La fréquence de mesure des trains d'ondes périodiquement lancés dans le guide est choisie en relation avec la rapidité des variations du niveau de liquide.

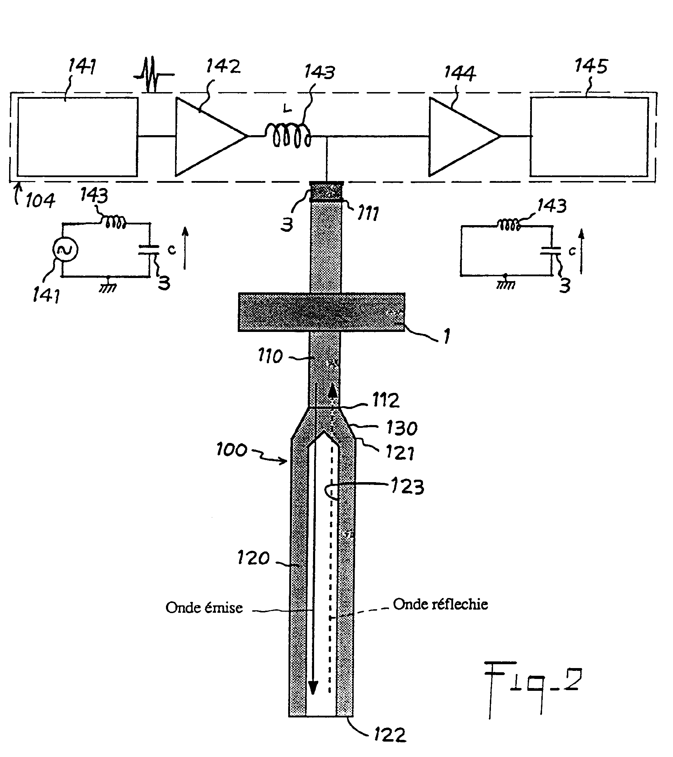

On a représenté sur la figure 2 un détecteur comprenant des circuits de traitement électronique réalisés selon un mode particulier de réalisation de l'invention. Les circuits de production d'impulsions d'excitation comprennent le montage série constitué par un générateur 141, un amplificateur 142 présentant une impédance de sortie faible et une inductance 143 dont la valeur est déterminée pour définir, à la fréquence porteuse prédéterminée fᵢ, un circuit résonnant série avec le condensateur constitué par le transducteur. Les circuits de détection des impulsions délivrées par le transducteur 3 comprennent un amplificateur 144 à grande impédance d'entrée et des moyens de visualisation 145 ou d'analyse des signaux délivrés par l'amplificateur 144.

Le montage de la figure 2 est simple et facile à réaliser puisque l'inductance 143 peut être connectée directement entre les amplificateurs 142 et 144, le point commun à l'inductance 143 et l'entrée de l'amplificateur 144 étant connecté à l'une des électrodes du transducteur 3. Comme l'impédance de sortie de l'amplificateur 142 est petite, la tension induite par l'écho renvoyé par le guide 100 en l'absence de liquide au niveau de l'extrémité libre 122, apparaît aux bornes d'un circuit résonnant parallèle constitué par l'inductance 143 et le transducteur 3. Cette tension induite est appliquée à l'amplificateur 144 qui permet ensuite par une visualisation ou un circuit de comparaison avec un seuil prédéterminé, de détecter la présence ou l'absence de tension induite représentant l'absence ou la présence de liquide au niveau de la partie inférieure du guide 100.

Comme on l'a indiqué en référence à la figure 1, lorsque le niveau de liquide atteint le niveau n₁ voisin de l'extrémité libre inférieure 122 du guide 100, l'écho 53 renvoyé par ladite extrémité libre 122 et correspondant au train d'ondes incident 51 présente une atténuation mais reste décelable, tandis que lorsque le niveau de liquide atteint un niveau n₂ situé à une certaine distance, par exemple de l'ordre de quelques centimètres, au-dessus du niveau n₁, l'écho 52 renvoyé par l'extrémité libre 122 et correspondant au même train d'ondes incident 51 disparait complètement et n'est plus décelable par les circuits de traitement 43.

En effectuant à l'aide des circuits de traitement 43 des comparaisons avec plusieurs seuils de niveaux différents inférieurs au seuil correspondant à l'amplitude de l'écho 53 lorsque le liquide atteint le niveau n₁, il est possible de détecter à l'aide du même guide 100 la présence de liquide à différents niveaux répartis entre les niveaux n₁ et n₂, chaque niveau n₁, n₃, n₄, n₂ correspondant à une amplitude différente de l'écho produit à l'extrémité libre 122 du guide 100.

A titre d'exemple, on peut prévoir quatre niveaux n₁, n₃ n₄, n₂ séparés par 1 cm environ. Les circuits de traitement 43 comprennent alors un circuit comparateur avec quatre seuils différents et il est possible de prévoir en sortie des circuits 43 plusieurs voyants qui s'allument chacun lorsque le liquide a atteint l'un des niveaux prédéterminés n₁, n₃, n₄, n₂. La réalisation d'un détecteur à plusieurs niveaux est naturellement possible avec la variante de la figure 3 aussi bien qu'avec celle de la figure 4 et avec le montage de la figure 2 aussi bien qu'avec le montage de la figure 1.

Par ailleurs, la portion de liaison 130 assurant la jonction entre la partie supérieure 110 cylindrique pleine de faible section et la partie inférieure 120 sensible à la présence de liquide peut donner lieu à un écho secondaire permanent 55 (fig 5 et 6) dont l'amplitude est plus ou moins forte selon la réalisation de la portion de liaison 130. Cet écho secondaire permanent 55 présente un temps de retard inférieur à celui des échos 52, 53, 54 renvoyés par l'extrémité libre inférieure 122 du guide 100. De la sorte cet écho secondaire permanent 55 peut être facilement discriminé par les circuits de traitement 43. Toutefois, l'écho secondaire permanent 55 peut avantageusement être utilisé comme témoin garantissant que le dispositif détecteur émet normalement des ondes élastiques. Ainsi, lorsque le liquide atteint le niveau n₂ et conduit à la disparition de l'écho réalisateur de la présence de liquide produit par l'extrémité libre 122, la persistance de l'écho secondaire 55 permet de vérifier que l'intégrité du détecteur reste intacte.

Naturellement, cette caractéristique n'est qu'optionnelle et la portion de liaison 130 peut également être réalisée de manière à réduire pratiquement complètement l'écho secondaire 55.

Par ailleurs, on a décrit en référence à la figure 1 un moyen transducteur unique 3 jouant le rôle à la fois de moyen transducteur émetteur et de moyen transducteur récepteur. Il serait naturellement possible de disposer au voisinage de la première extrémité libre 111 des moyens transducteurs émetteur et récepteur distincts coopérant respectivement avec les circuits 41 de production d'impulsions d'excitation et les circuits 43 de détection des impulsions réfléchies.

Le dispositif est apte à fonctionner avec divers types de liquides tels que de l'eau, des hydrocarbures, ou des produits chimiques compatibles avec le matériau constitutif du guide.

## Revendications

1. Détecteur de la présence d'un liquide à guide composite d'ondes élastiques, comprenant
a) un guide métallique (100) monté sur un support (1) et présentant une première extrémité libre (111) située dans une zone non accessible par le liquide, et une deuxième extrémité libre (122) située à l'intérieur d'un récipient contenant un liquide (2), en dessous d'un plan prédéterminé (n₁) au niveau duquel la présence ou l'absence de liquide (2) doit être détectée;
b) un moyen transducteur (3) disposé au voisinage de ladite première extrémité libre (111); et
c) des moyens électroniques de traitement (4; 104) comprenant
i) des circuits (41; 141 à 143) de production d'impulsions d'excitation de fréquence prédéterminée fᵢ appliquées périodiquement au moyen transducteur (3) pour créer des ondes élastiques incidentes dans le guide (100), et
ii) des circuits (43; 144, 145) de détection des impulsions délivrées par le moyen transducteur (3) en écho aux ondes élastiques incidentes en l'absence de liquide en contact avec la deuxième extrémité libre (122) du guide (100),
caractérisé en ce que le guide (100) comprend une première partie supérieure (110) cylindrique pleine, de section réduite dont le diamètre extérieur présente une première valeur d1, et qui est fixée sur un support (1), et une seconde partie inférieure rigide (120) cylindrique dont le diamètre extérieur présente une seconde valeur d2 supérieure à ladite première valeur d1, qui prolonge vers le bas la première partie cylindrique (110) et est raccordée à celle-ci par une courte portion de liaison (130), et en ce que la valeur de la fréquence prédéterminée fᵢ est choisie de manière que les trains d'ondes élastiques se propagent dans la première partie cylindrique (110) à la vitesse de groupe des ondes de basse fréquence et dans la deuxième partie cylindrique (120) à la vitesse de groupe minimale correspondant au point d'inflexion de la courbe de la vitesse de phase en fonction de la fréquence.

2. Détecteur selon la revendication 1, caractérisé en ce que ladite seconde partie cylindrique (120) présente une forme tubulaire.

3. Détecteur selon l'une quelconque des revendications 1 et 2, caractérisé en ce que ladite courte portion de liaison (130) présente une surface extérieure en forme de cloche.

4. Détecteur selon l'une quelconque des revendications 1 et 2, caractérisé en ce que ladite courte portion de liaison (130) présente une surface extérieure de forme essentiellement tronconique.

5. Détecteur selon l'une quelconque des revendications 1 à 4, caractérisé en ce que le guide composite (100) est réalisé en acier inoxydable.

6. Détecteur selon l'une quelconque des revendications 1 à 5, caractérisé en ce que le diamètre extérieur de la première partie cylindrique (110) du guide (100) est supérieur ou égal à 10 mm, en ce que le diamètre extérieur de la seconde partie cylindrique (120) du guide (100) est compris entre environ 15 et mm et en ce que ladite fréquence prédéterminée fi est comprise entre environ 75 et 175 kHz.

7. Détecteur selon l'une quelconque des revendications 1 à 6, caractérisé en ce que la première partie cylindrique (110) présente une longueur comprise entre environ 50 et 150 mm, la seconde partie cylindrique (120) présente une longueur comprise entre environ 80 et 200 mm et la portion de liaison (130) présente une longueur comprise entre environ 10 et 30 mm.

8. Détecteur selon l'une quelconque des revendications 1 à 7, caractérisé en ce que les circuits (141 à 143) de production d'impulsions d'excitation comprennent le montage série constitué par un générateur (141), un amplificateur (142) présentant une impédance de sortie faible et une inductance (143) dont la valeur est déterminée pour définir, à ladite fréquence prédéterminée fᵢ, un circuit résonnant série avec le condensateur constitué par le moyen transducteur (3), et en ce que les circuits (144, 145) de détection des impulsions délivrées par le moyen transducteur (3) comprennent au moins un amplificateur (144) à grande impédance d'entrée et des moyens de visualisation (145) ou d'analyse des signaux délivrés par ledit amplificateur (144).

9. Détecteur selon l'une quelconque des revendications 1 à 8, caractérisé en ce que le moyen transducteur est constitué par une céramique piézoélectrique.

10. Détecteur selon l'une quelconque des revendications 1 9, caractérisé en ce que les circuits (43; 144, 145) de détection des impulsions délivrées par le moyen transducteur (3) comprennent des moyens de discrimination d'un écho secondaire permanent créé par la portion de liaison (130) assurant la jonction entre les parties supérieure (110) et inférieure (120) du guide.

11. Détecteur selon l'une quelconque des revendications 1 à 10, caractérisé en ce que les circuits (43; 144, 145) de détection des impulsions délivrées par le moyen transducteur (3) comprennent des moyens de comparaison ou de visualisation à plusieurs seuils pour permettre la détection de la présence de liquide à plusieurs niveaux (n₁, n₃, n₄, n₂) situés au-dessus de la deuxième extrémité libre (122) du guide (100).

## Patentansprüche

1. Detektor für die Anwesenheit einer Flüssigkeit, mit einem zusammengesetzten Wellenleiter für elastische Wellen, mit
a) einem auf einem Träger (1) montierten metallischen Wellenleiter (100), der ein erstes freies Ende (111) in einem für die Flüssigkeit unzugänglichen Bereich und ein zweites freies Ende (122) innerhalb eines eine Flüssigkeit (2) enthaltenden Behälters unterhalb einer vorgegebenen Ebene (n₁) aufweist, in deren Höhe die Anwesenheit oder Abwesenheit der Flüssigkeit (2) detektiert werden soll;
b) einem in der Nähe des ersten freien Endes (111) angeordneten Wandlermittel (3); und
c) elektronischen Verarbeitungsmitteln (4; 104) mit
i) Schaltungen (41; 141 bis 143) zur Erzeugung von Erregungspulsen von vorgegebener Frequenz fᵢ, die periodisch an das Wandlermittel (3) angelegt werden, um einfallende elastische Wellen im Wellenleiter (100) zu erzeugen, und
ii) Schaltungen (43; 144, 145) zur Detektion der Impulse, die von dem Wandlermittel (3) als Echo auf die einfallenden elastischen Wellen bei Abwesenheit von Flüssigkeit in Kontakt mit dem zweiten freien Ende (122) des Wellenleiters (100) abgegeben werden,
dadurch gekennzeichnet, daß der Wellenleiter (100) einen ersten vollzylindrischen oberen Bereich (110) mit einem geringen Querschnitt, dessen Außendurchmesser einen ersten Wert dl hat, und der an einem Träger (1) befestigt ist, sowie einen zweiten, unteren starren zylindrischen Bereich (120) aufweist, dessen Außendurchmesser einen zweiten Wert d2 hat, der größer ist als der erste Wert dl, wobei der zweite zylindrische Bereich (120) den ersten zylindrischen Bereich (110) nach unten verlängert und mit diesem über ein kurzes Verbindungsstück (130) verbunden ist, und daß der vorgegebene Frequenzwert fᵢ so gewählt ist, daß die elastischen Wellenzüge sich im ersten zylindrischen Bereich (110) mit der Gruppengeschwindigkeit der niederfrequenten Wellen und im zweiten zylindrischen Bereich (20) mit der minimalen Gruppengeschwindigkeit ausbreiten, die dem Umkehrpunkt der Phasengeschwindigkeitskurve in Abhängigkeit von der Frequenz entspricht.

2. Detektor nach Anspruch 1, dadurch gekennzeichnet, daß der zweite zylindrische Bereich (120) rohrförmig ist.

3. Detektor nach einem der Ansprüche 1 oder 2, dadurch gekennzeichnet, daß das kurze Verbindungsstück (130) eine glockenförmige Außenfläche aufweist.

4. Detektor nach einem der Ansprüche 1 oder 2, dadurch gekennzeichnet, daß das kurze Verbindungsstück (130) eine im wesentlichen kegelförmige Außenfläche aufweist.

5. Detektor nach einem der Ansprüche 1 bis 4, dadurch gekennzeichnet, daß der zusammengesetzte Wellenleiter (100) aus Edelstahl hergestellt ist.

6. Detektor nach einem der Ansprüche 1 bis 5, dadurch gekennzeichnet, daß der Außendurchmesser des ersten zylindrischen Bereichs (110) des Wellenleiters (100) größer oder gleich 10 mm ist, daß der Außendurchmesser des zweiten zylindrischen Bereichs (120) des Wellenleiters (100) zwischen ca. 15 und 25 mm liegt, und daß die vorgegebene Frequenz fᵢ zwischen ca. 75 und 175 kHz liegt.

7. Detektor nach einem der Ansprüche 1 bis 6, dadurch gekennzeichnet, daß der erste zylindrische Bereich (110) eine Länge zwischen ca. 50 und 150 mm aufweist, daß der zweite zylindrische Bereich (120) eine Länge zwischen ca. 80 und 200 mm aufweist, und daß das Verbindungsstück (130) eine Länge zwischen ca. 10 und 30 mm aufweist.

8. Detektor nach einem der Ansprüche 1 bis 7, dadurch gekennzeichnet, daß die Schaltungen (141 bis 143) zur Erzeugung von Erregungsimpulsen eine Reihenschaltung umfassen, bestehend aus einem Generator (141), einem Verstärker (142) mit geringer Ausgangsimpedanz und einer Induktivität (143), deren Wert festgelegt ist, um bei der vorgegebenen Frequenz fᵢ eine resonante Reihenschaltung mit dem Kondensator zu definieren, der von dem Wandlermittel (3) gebildet wird, und daß die Schaltungen (144, 145) zur Detektion der vom Wandlermittel (3) abgegebenen Impulse wenigstens einen Verstärker (144) mit großer Eingangsimpedanz und Anzeige- oder Analysemittel (145) für die vom Verstärker (144) abgegebenen Signale umfassen.

9. Detektor nach einem der Ansprüche 1 bis 8, dadurch gekennzeichnet, daß das Wandlermittel durch eine piezoelektrische Keramik gebildet ist.

10. Detektor nach einem der Ansprüche 1 bis 9, dadurch gekennzeichnet, daß die Schaltungen (43; 144, 145) zur Detektion der vom Wandlermittel (3) abgegebenen Impulse Mittel zur Diskriminierung eines permanenten Sekundärechos umfassen, das vom die Kopplung zwischen oberem und unterem Bereich (110, 120) des Wellenleiters herstellenden Verbindungsstück (130) erzeugt wird.

11. Detektor nach einem der Ansprüche 1 bis 10, dadurch gekennzeichnet, daß die Schaltungen (43; 144, 145) zur Detektion der vom Wandlermittel (3) abgegebenen Impulse Vergleichs- oder Anzeigemittel mit mehreren Schwellen umfassen, um die Detektion der Anwesenheit von Flüssigkeit bei mehreren Niveaus (n₁, n₃, n₄, n₂) zu ermöglichen, die oberhalb des zweiten freien Endes (122) des Wellenleiters (100) liegen.

## Claims

1. Liquid presence detector having a composite waveguide for acoustic waves, comprising:
a) a metal waveguide (100) mounted on a support (1) and having a first free end (111) situated in a zone which is not accessible by the liquid, and a second free end (122) situated inside a receptacle containing a liquid (2), beneath a predetermined plane (n₁) at the level where the presence or absence of liquid (2) is to be detected;
b) transducer means (3) disposed in the vicinity of said first free end (111); and
c) electronic processing means (4; 104) comprising:
i) circuits (41; 141 to 143) for producing excitation pulses at a predetermined frequency fᵢ, which pulses are applied periodically to the transducer means (3) to create incident acoustic waves in the waveguide (100); and
ii) circuits (43; 144, 145) for detecting pulses delivered by the transducer means (3) in response to an echo of the incident acoustic waves from the second free end (122) of the waveguide (100) in the absence of liquid;
characterized in that the waveguide (100) has a solid cylindrical top first portion (110) of small section having an outside diameter of a first value d1 and which is fixed to a support (1), and a cylindrical rigid bottom second portion (120) whose outside diameter has a second value d2 greater than said first value dl, said second portion extending the cylindrical first portion (110) downwards and being connected thereto by a short linking portion (130), and in that the value of the predetermined frequency fᵢ is selected in such a manner that the acoustic wave trains propagate in the cylindrical first portion (110) at the group velocity of low frequency waves and propagate in the cylindrical second portion (120) at the minimum group velocity corresponding to the point of inflection in the curve of phase velocity as a function of frequency.

2. Detector according to claim 1, characterized in that said cylindrical second portion (120) is tubular in shape.

3. Detector according to any one of claims 1 and 2, characterized in that said short linking portion (130) has an outside surface which is bell-shaped.

4. Detector according to any one of claims 1 and 2, characterized in that said short linking portion (130) has an outside surface which is essentially frustoconical in shape.

5. Detector according to any one of claims 1 to 4, characterized in that the composite waveguide (100) is made of stainless steel.

6. Detector according to any one of claims 1 to 5, characterized in that the outside diameter of the cylindrical first portion (110) of the waveguide (100) is greater than or equal to 10 mm, in that the outside diameter of the cylindrical second portion (120) of the waveguide (100) is in the range about 15 mm to about 25 mm, and in that said predetermined frequency fᵢ is in the range about 75 kHz to about 175 kHz.

7. Detector according to any one of claims 1 to 6, characterized in that the first cylindrical portion (110) has a length in the range about 50 mm to about 150 mm, the second cylindrical portion (120) has a length in the range about 80 mm to about 200 mm, and the linking portion (130) has a length in the range about 10 mm to about 30 mm.

8. Detector according to any one of claims 1 to 7, characterized in that the circuits (141 to 143) for producing excitation pulses comprise a series connection constituted by a generator (141), an amplifier (142) having a low output impedance, and an inductor (143) whose value is determined so as to define, at said predetermined frequency fᵢ a series-resonant circuit with the capacitance constituted by the transducer means (3) and in that the circuits (144, 145) for detecting the pulses delivered by the transducer means (3) comprise at least one amplifier (144) having high input impedance and display means (145) or means for analyzing the signals delivered by said amplifier (144).

9. Detector according to any one of claims 1 to 8, characterized in that the transducer means is constituted by a piezoelectric ceramic.

10. Detector according to any one of claims 1 to 9, characterized in that the circuits (43; 144, 145) for detecting the pulses delivered by the transducer means (3) include means for discriminating a permanent secondary echo created by the linking portion (130) interconnecting the top portion (110) and the bottom portion (120) of the waveguide.

11. Detector according to any one of claims 1 to 10, characterized in that the circuits (43; 144, 145) for detecting the pulses delivered by the transducer means (3) include display means or comparator means having a plurality of thresholds for detecting the presence of liquid at a plurality of levels n₁, n₃, n₄, n₂ situated above the second free end (122) of the waveguide (100).
